Europäisches Patentamt

European Patent Office

Office européen des brevets

(11) Publication number: **0 240 328**
**A2**

(12) # EUROPEAN PATENT APPLICATION

(21) Application number: **87302821.1**

(51) Int. Cl.⁴: **G 06 F 1/00**

(22) Date of filing: **01.04.87**

(30) Priority: **03.04.86 GB 8608172**

(43) Date of publication of application:
**07.10.87 Bulletin 87/41**

(84) Designated Contracting States:
**BE CH DE FR GB IT LI NL SE**

(71) Applicant: **Datasafe Limited**
**217A Bath Road Leckhampton**
**Cheltenham Gloucestershire GL53 7NN (GB)**

(72) Inventor: **Walker, Sean Michael**
**33 King Street**
**Cheltenham Gloucestershire (GB)**

(74) Representative: **Harding, Richard Patrick et al**
**Arthur R. Davies & Co. 27 Imperial Square**
**Cheltenham GL50 1RQ (GB)**

(54) **Computer security device.**

(57) With a view to preventing access to data stored in a computer installation by remote sensing of stray electromagnetic radiation emitted by the installation, a transmitter is provided within a housing 8 for transmitting electromagnetic radiation over a frequency range which includes at least the main frequencies at which stray radiation is emitted by the installation. An antenna 9 is coupled to the transmitter and attached to the installation. In this manner the stray radiation emitted by the installation is substantially masked by the radiation transmitted by the device. Such a device is capable of protecting substantially any type of computer installation, and of preventing an unauthorised person from reading displayed data or other information within the computer by means of a remote receiver, visual display unit or data reader.

FIG 1

EP 0 240 328 A2

## Description

"Computer Security Device"

This invention relates to computer security devices

All computer installations emit stray electromagnetic radiation from various parts of the installation, for example from the visual display unit and from the leads interconnecting the various parts of the installation. By use of sensitive receiving equipment, it is possible to detect such stray radiation at a location remote from the computer installation, and to thereby gain access to data stored in the computer installation. For example, if the detected radiation is emitted by the visual display unit, it is possible for the receiving equipment to directly reproduce information displayed on the visual display unit on a separate screen. If the detected radiation emanates from some other part of the computer installation, the received data may be in the form of machine code, but access to the information represented by such code can generally be obtained by decoding by a skilled operator. Such remote detection of stray radiation represents a considerable security risk for data stored in computer installations.

It is an object of the invention to provide a device which may be incorporated in a computer installation during manufacture or added to an existing computer installation in order to protect the installation against such remote access to data stored in the installation.

According to the present invention there is provided a computer security device for preventing access to data stored in a computer installation by remote sensing of stray electromagnetic radiation emitted by the installation, the device comprising a transmitter for transmitting electromagnetic radiation over a frequency range which includes at least the main frequencies at which stray radiation is emitted by the installation, and antenna means coupled to the transmitter and adapted for attachment to the installation, whereby the stray radiation emitted by the installation is substantially masked by the radiation transmitted by the device.

Such a device capable of protecting substantially any type of computer installation, whether in the form of a microcomputer, a personal computer, a desktop computer or a mainframe computer, and of preventing an unauthorised person from reading displayed data or other information within the computer by means of a remote receiver, visual display unit or data reader. Furthermore the device need not interfere with the normal operation of the computer installation or corrupt the displayed data or other information within the installation.

The antenna means may be in the form of a flexible elongate member which may be positioned, in use, to lie close to parts of the computer installation, such as the leads of the installation.

In a preferred embodiment of the invention the transmitter includes a transmitting diode and amplifying means for amplifying the output of the diode. The transmitting diode may be a zener diode.

The device preferably also includes power supply means, and indicating means, such as a lamp or meter, for providing a visual indication that the device is operating.

In order that the invention may be more fully understood, several preferred embodiments of the invention will now be described, by way of example, with reference to the accompanying drawings, in which:

Figure 1 is a diagrammatic perspective view of a computer installation to which a first device in accordance with the invention is fitted;

Figure 2 is a circuit diagram of the first device;

Figure 3 is a block diagram of a second device in accordance with the invention; and

Figure 4 is a block diagram of a third device in accordance with the invention.

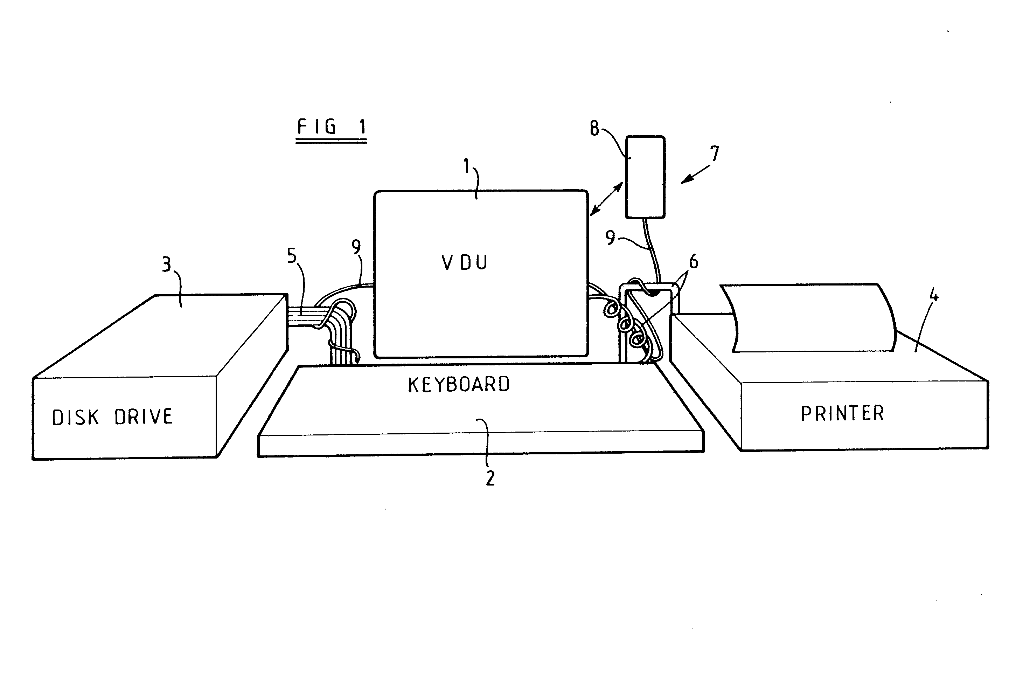

The computer installation shown in Figure 1 comprises a visual display unit 1, a keyboard 2, a disk drive 3, a printer 4, and leads 5 and 6 interconnecting these units. The computer security device 7 comprises a housing 8 adapted for connection to the installation, for example by being secured to one side of the visual display unit 1 by screws, and a flexible antenna 9 which may be wrapped around, or passed through coils of, the leads of the installation, as shown.

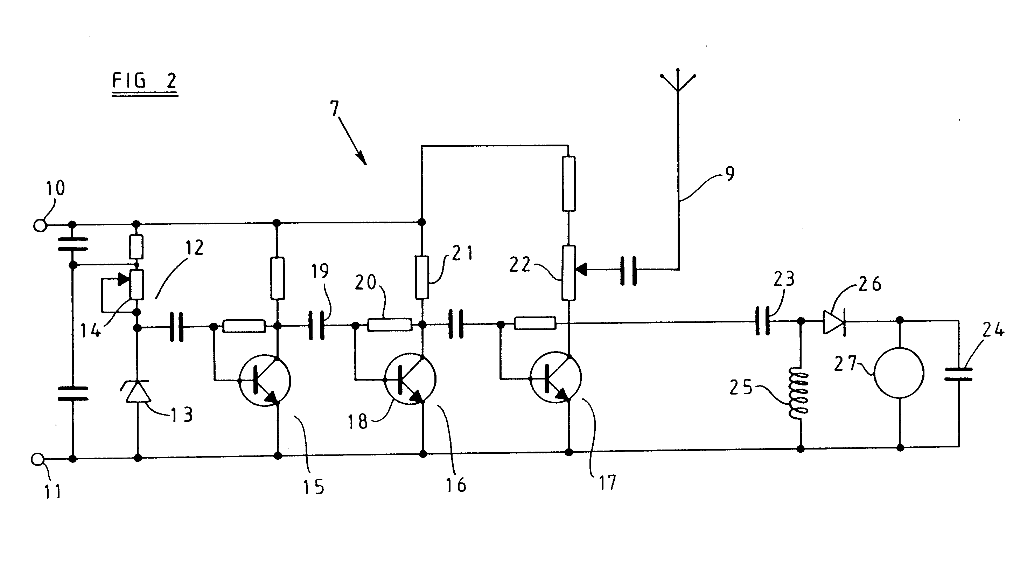

Referring to the circuit diagram of the device 7 shown in Figure 2, the device comprises terminals 10 and 11 for connection to a power supply (not shown), that is either a battery or a power supply for connection to the mains and separate from the computer power supply. A noise generation stage 12 of the device includes a 7.5V rating zener diode 13 and a variable resistor 14 for generating radio frequency noise. This stage 12 is followed by three radio frequency amplification stages 15, 16 and 17 in series, each of which comprises a bipolar transistor 18, a capacitor 19 and two resistors 20 and 21. The output of the final amplification stage 17 is supplied to the antenna 9, and a further variable resistor 22 is provided for adjusting the level of this output.

Such a circuit is capable of producing a localised randomly polarised, broad band modulated radio field around the computer installation, thereby corrupting the normally coherent electromagnetic radiation emitted by the installation. The transmitted signal is of a level which does not cause interference to other equipment above the acceptable minimum imposed by international standards.

The circuit shown in Figure 2 also includes metering circuitry comprising two capacitors 23 and 24, an inductance 25, a diode 26 and a meter 27 for monitoring the output signal of the device. In operation the variable resistor 22 is adjusted so as to give maximum deflection on the meter 27.

In an alternative embodiment the metering circuitry is replaced by circuitry for triggering an indicator, such as a light emitting diode for indicating correct operation of the device. Such circuitry may be arranged to illuminate the light emitting diode if the output signal falls below a predetermined level adjustable by means of a threshold control.

It should be appreciated that the electromagnetic radiation emitted by the device 7 comprises low frequency components emitted by the antenna 9, which is preferably in the form of one or more coils, and also high frequency components emitted by the circuitry within the housing 8. The device 7 is designed as far as possible to emulate the electromagnetic emission pattern of the computer installation which it is intended to protect. The main sources of stray radiation emitted by such an installation are the visual display unit 1, which can essentially be considered as a metal-screened box which is open on two opposite sides, and the coiled connecting leads. To a lesser extent stray radiation will also be generated from the keyboard and disk drive. Thus, in order to emulate the radiation pattern of the visual display unit 1, the housing 8 is a cuboid plastics box which is metallically screened on four sides, but is not metallically screened on two opposite vertical sides corresponding to the two open sides of the visual display unit 1.

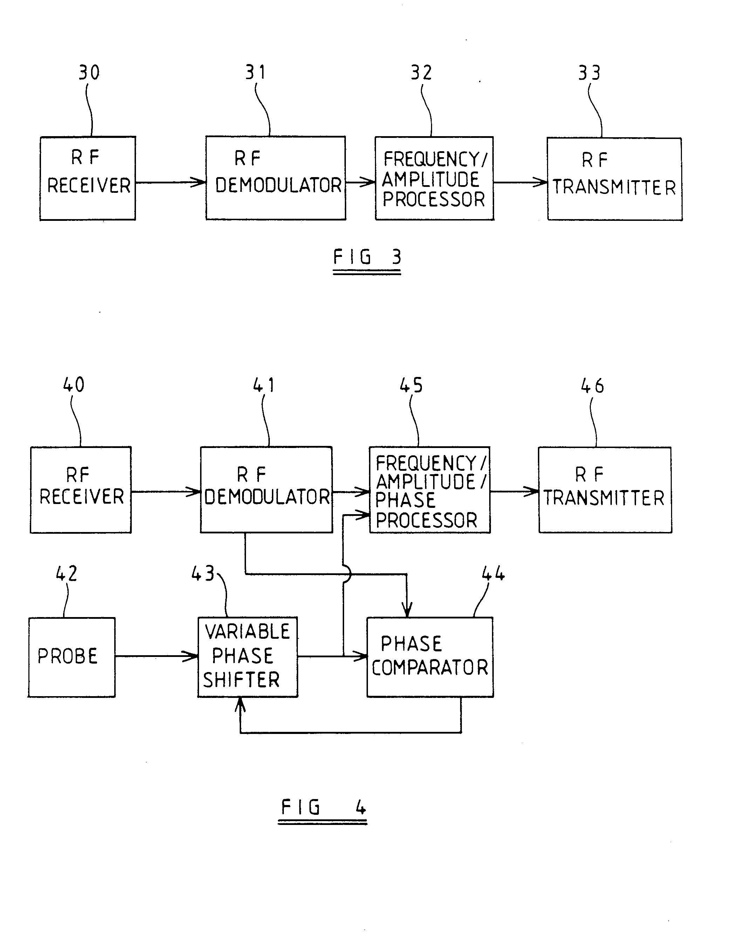

Figure 3 is a block diagram of an enhanced form of computer security device in accordance with the invention. This device incorporates a radio frequency receiver 30 for receiving the electromagnetic radiation emitted by the computer installation and for supplying its output to a radio frequency demodulator 31 which serves to detect the frequency and amplitude of the received radiation. A frequency/amplitude processor 32 then computes from the output of the demodulator 31 a noise signal which is supplied to a radio frequency transmitter 33 in order to transmit a radio frequency noise field having components of the same amplitude and frequency as the components of the electromagnetic radiation emitted by the installation. The transmitted components are at, and on either side of, the frequencies of the received components so that the information contained within the radiation emitted by the installation will be effectively masked.

Such a device produces masking radiation more closely matched to the radiation of the installation as compared with the device described with reference to Figures 1 and 2, and thus increases the ability of the device to corrupt radiated data signals. In addition the total radiation from the device is decreased, and the power requirement of the device is accordingly reduced.

The device of Figure 3 may additionally include metering circuitry as described above, or alternatively may include signal discriminating means for supplying a signal to a suitable input port of the installation to display either a "device failure" or "data protected" flag on the visual display device 1.

The device of Figure 4 incorporates a radio frequency receiver 40 and radio frequency demodulator 31 which serve to detect the frequency and amplitude of the radiation emitted by the installation in the manner described with reference to Figure 3. In addition a capacitive and/or inductive probe 42 serves to detect the video data switching signal supplied to the visual display unit 1 and to supply the detected signal to a variable phase shifter 43. The output of the variable phase shifter 43 is supplied to a phase comparator 44 and is compared in the phase comparator 44 with the output from the demodulator 41. An error signal proportional to the phase relationship between the detected radiation signal and the video data switching signal is produced as a result of this comparison, and is fed back to the variable phase shifter 43 so as to produce a phase shift such that the output of the variable phase shifter 43 and the output of the demodulator 41 are 180° out-of-phase. A frequency/amplitude/phase processor 45 then produces a signal in dependance on the outputs of the demodulator 41 and the variable phase shifter 43 which is such as to cause a radio frequency transmitter 46 to emit a radio frequency noise field having components of the same frequency and amplitude as the components of the radiation emitted by the installation, but in anti-phase to such components. Thus the transmitted masking radiation is the inverse of the radiation emitted by the computer installation and serves to suppress the stray radiation.

In a modification of the device of Figure 4 the probe 42 is replaced by a tap into the video data line between the computer processor and the visual display unit, the tapped signal being supplied to the variable phase shifter 43 through a delay line which serves to delay the signal by an amount corresponding to a single horizontal scan line on the visual display unit. This modification effectively eliminates any protection deficiencies produced by radiated emission propagation delays.

In all embodiments of the invention it is preferred that the coiled antenna is adapted to be attached to the back of the visual display unit, for example by being provided with self-adhesive cable clips spaced along its length, so that it extends along the four sides of the back of the unit, and is also adapted to be secured at its free end, by means of a clip, for example, to either the input lead to the visual display unit or the lead connecting the keyboard to the processing unit.

**Claims**

1. A computer security device for preventing access to data stored in a computer installation by remote sensing of stray electromagnetic radiation emitted by the installation, characterised in that the device (7) comprises a transmitter for transmitting electromagnetic radiation over a frequency range which includes at least the main frequencies at which stray radiation is emitted by the installation, and antenna means (9) coupled to the transmitter and adapted for attachment to the installation, whereby the stray radiation emitted by the installation is substantially masked by the radiation transmitted by the device.

2. A device according to claim 1, wherein the antenna means (9) is in the form of a flexible elongate member which may be positioned, in use, to lie close to parts of the computer installation.

3. A device according to claim 2, wherein the antenna means (9) is coiled.

4. A device according to claim 1, 2 or 3, wherein the transmitter includes a transmitting diode (13) and amplifying means (15, 16, 17) for amplifying the output of the diode (13).

5. A device according to claim 4, wherein the transmitting diode (13) is a zener diode.

6. A device according to any preceding claim, further comprising a receiver (30;40) for receiving the stray radiation emitted by the installation, and processing means (32;45) for causing the transmitter (33;46) to transmit a radiation pattern determined by the received radiation.

7. A device according to claim 6, further comprising phase detection means (42) for detecting the phase of a video data switching signal within the installation, and phase comparison means (44) for comparing the phases of the video data switching signal and the received radiation and for controlling the phase of the transmitted radiation in dependence on the result of the comparison.

8. A device according to claim 7, wherein the phase detection means (42) comprises a capacitive and/or inductive probe.

9. A device according to claim 7, wherein the phase detection means (42) comprises a delay line adapted to be connected to a video data line of the installation and to supply to the phase comparison means (44) a signal delayed by a predetermined amount with respect to a signal in the video data line.

10. A computer installation incorporating a computer security device for preventing access to data stored in the installation by remote sensing of stray electromagnetic radiation emitted by the installation, characterized in that the device (7) comprises a transmitter for transmitting electromagnetic radiation over a frequency range which includes at least the main frequencies at which stray radiation is emitted by the installation, and antenna means (9) coupled to the transmitter and attached to the installation, whereby the stray radiation emitted by the installation is substantially masked by the radiation transmitted by the device.

FIG 1

FIG 2

0240328

FIG 3

FIG 4